# FASCICULE DE BREVET EUROPEEN

(11) **EP 3 085 101 B1**
(45) Date de publication et mention de la délivrance du brevet: **07.07.2021**
(21) Numéro de dépôt: 14828232.0
(22) Date de dépôt: 17.12.2014
(51) Int. Cl.: H04N 21/436, H04N 21/2385, H04N 21/858, H04N 21/472

(54) **PROCÉDÉ DE RÉSERVATION D'UNE BANDE PASSANTE DANS UN RÉSEAU POUR L'EXÉCUTION D'UN SERVICE SUR UN TERMINAL UTILISATEUR**
VERFAHREN ZUR RESERVIERUNG EINER BANDBREITE IN EINEM NETZWERK ZUR DURCHFÜHRUNG EINES DIENSTES AUF EINEM BENUTZERENDGERÄT
METHOD OF RESERVING A BANDWIDTH IN A NETWORK FOR THE EXECUTION OF A SERVICE ON A USER TERMINAL

(30) Priorité: 17.12.2013 FR 1362798
(43) Date de publication de la demande: 26.10.2016
(73) Titulaire: ORANGE, 75015 Paris (FR)
(72) Inventeur: BOUVET, Eric, 35520 Montreuil Le Gast (FR); MARCHAND, Hervé Michel, 35770 Vern Sur Seiche (FR)
(86) Numéro de dépôt international: PCT/FR2014/053387
(87) Numéro de publication internationale: WO 2015/092273

(56) Documents cités:
- EP-A1- 2 141 868
- EP-A1- 2 575 302
- EP-A2- 1 480 457
- EP-A2- 2 472 737
- KR-B1- 100 656 526
- BERNERS-LEE CERN L MASINTER XEROX CORPORATION M MCCAHILL UNIVERSITY OF MINNESOTA EDITORS T: "Uniform Resource Locators (URL); rfc1738.txt", 19941201, 1 décembre 1994 (1994-12-01), XP015007525, ISSN: 0000-0003
- CHRIS DEVELDER ET AL: "Delivering scalable video with QoS to the home", TELECOMMUNICATION SYSTEMS ; MODELING, ANALYSIS, DESIGN AND MANAGEMENT, KLUWER ACADEMIC PUBLISHERS, BO, vol. 49, no. 1, 9 juin 2010 (2010-06-09), pages 129-148, XP019991731, ISSN: 1572-9451, DOI: 10.1007/S11235-010-9358-3
- None

## Description

L'invention se rapporte au domaine de la gestion de la qualité de service dans un réseau de télécommunications. Elle concerne plus précisément la réservation d'une bande passante nécessaire à un flux multimédia destiné à être lu sur un terminal d'utilisateur d'un réseau résidentiel, de telle manière que le flux ne soit pas dégradé par rapport à d'autres flux de ce réseau.

L'invention trouve une application particulièrement intéressante dans un environnement résidentiel dans lequel une pluralité de terminaux est adaptée pour accéder à une plate-forme de services multimédia du réseau Internet à travers une passerelle résidentielle (le terme habituellement utilisé est le terme anglais « gateway ») de manière à lire un contenu multimédia selon un certain niveau de qualité de service. Dans un environnement résidentiel classique, un équipement particulier appelé décodeur TV (ou « STB », pour « Set Top Box » en anglais) est adapté pour afficher un contenu multimédia sur l'écran d'un téléviseur. Un service de vidéo à la demande (ou « VoD » pour « Video on Demand »), rendu par la plate-forme de services permet à un utilisateur de commander un contenu en précisant des préférences relativement à ce contenu, par exemple la définition dans laquelle il souhaite visionner le film. Ces préférences définissent un certain niveau de qualité de service et conditionnent notamment la bande passante requise pour le flux à transmettre au décodeur. Le service est en général facturé en fonction du niveau de qualité de service requis, la facture augmentant avec le niveau de qualité de service. Afin de garantir le niveau de qualité de service demandé tout au long de la distribution du contenu de la plate-forme de services au décodeur, il est habituel, dans l'environnement résidentiel, que la passerelle établisse un lien privilégié avec ce décodeur et réserve les ressources nécessaires pour que la qualité de service requise soit fournie sur ce lien de manière à garantir le niveau de qualité de service pour la diffusion de contenus. La réservation de ressources consiste ainsi à réserver une certaine bande passante et à choisir une classe de service adaptée au service rendu par la plate-forme, par exemple le mode « CBR » (de l'anglais « Constant Bit Rate ») pour un service vidéo. Un tel lien privilégié peut être défini par la passerelle résidentielle par configuration, en associant des paramètres de qualité de service choisis à une prise Ethernet à laquelle est connecté le décodeur, ou par association de ces paramètres à une adresse MAC (de l'anglais « Media Access Control ») correspondant à l'adresse du décodeur. Le flux acheminé entre la passerelle résidentielle et le décodeur, et donc entre la plate-forme de services et le décodeur bénéficie alors de la qualité de service définie par les paramètres qui ont été choisis. Ainsi, par exemple, si l'utilisateur commande un film en HD (pour « Haute Définition ») et est facturé en conséquence, il est assuré de visualiser le film en HD sur son téléviseur.

Le réseau résidentiel comprend en général d'autres équipements, dits équipements génériques, ou terminaux « OTT » (de l'anglais « Over The Top »), tels que des PC (de l'anglais « Personal Computer »), des tablettes numériques, etc., qui accèdent à la passerelle résidentielle et qui sont susceptibles d'accéder à une plate-forme de services pour commander un contenu à afficher sur l'écran du terminal générique. Cependant, de tels terminaux n'ont pas la même garantie de qualité de service qu'un équipement dédié tel que le décodeur TV. Il n'est ainsi pas possible de définir de liens privilégiés pour de tels terminaux génériques pour garantir un certain niveau de qualité de service entre ces terminaux et le réseau. En général, les flux issus de ces terminaux sont traités par la passerelle en mode « meilleur effort » (ou « best effort » en anglais). Ce mode ne fournit aucune différentiation entre ces flux et ne permet pas de garantir une qualité de service donnée pour un flux particulier, qui nécessite par exemple un débit plus élevé que d'autres flux. Ainsi lorsqu'un utilisateur exécute un service de vidéo à la demande sur son terminal et commande à une plate-forme de services un film en Haute Définition, il n'a aucune garantie que la qualité de service commandée lui soit effectivement fournie, sauf à modifier son terminal de manière à intégrer des modules spécifiques, adaptés pour gérer la qualité de service sur le terminal, ou pour piloter la qualité de service de la passerelle. Un tel module va par exemple agir sur un lecteur vidéo du terminal (le terme habituellement utilisé est le terme anglais « player ») afin de mettre en œuvre un téléchargement vidéo progressif associé à des contraintes d'attente.

Il n'existe actuellement aucune solution pour garantir à un terminal générique quelconque, c'est-à-dire non modifié, la qualité de service demandée lors de l'accès à un service.

Le document brevet KR100656526B1 de Samsung Electronics Co Ltd du 5 décembre 2006 décrit une méthode de réservation de bande passante au niveau d'une passerelle d'accès. Dans cette méthode, la réservation de la bande passante s'effectue au niveau d'une passerelle d'accès située dans le réseau. La passerelle d'accès reçoit un jeton dans une première requête d'accès. La réception de ce jeton permet à la passerelle d'accès de vérifier que la bande passante a bien été prévue auparavant pour le client identifié par son adresse. Une passerelle domestique associée au client est destinataire d'un message comprenant le jeton. Cependant, il n'y a pas de réservation de bande passante par la passerelle domestique et dans le réseau local.

Le document brevet EP2575302A1 de British Telecom du 3 avril 2013 décrit une méthode de gestion de bande passante dans un système de délivrance de contenus de type VoD. Lors d'une demande de contenu, la plate-forme de services crée une URL comprenant un préfixe qui définit les caractéristiques de la ligne, en termes de débit, via laquelle un client peut obtenir le contenu. Notamment, l'URL indique sur quel port de la plate-forme de services une requête doit être dirigée pour obtenir le contenu. Là encore il n'est pas question d'une gestion de la bande passante pour et dans un réseau local.

Un des buts de l'invention est de remédier à des insuffisances/inconvénients de l'état de la technique et/ou d'y apporter des améliorations.

A cette fin, l'invention propose un procédé selon la revendication 1.

Ainsi, grâce au procédé de réservation de bande passante, un terminal générique pour lequel la qualité de service est habituellement gérée au mieux par la passerelle résidentielle, c'est-à-dire en mode « best effort », peut désormais se voir réserver par la passerelle une bande passante suffisante pour un service commandé auprès de la plate-forme de services et voir ainsi le flux associé à ce service priorisé par rapport à d'autres flux dans le réseau local.

C'est la plate-forme de services qui définit les paramètres de qualité de service dont elle a besoin pour le service requis depuis le terminal utilisateur. Les paramètres sont donc précisés service par service, et complètement adaptés au service requis. Par ailleurs, même si les paramètres sont transmis de la plate-forme au terminal puis du terminal à la passerelle résidentielle, plus précisément au relais DNS de la passerelle, le terminal n'est pas impacté par le procédé. En effet, le terminal transmet à la passerelle de manière transparente et dans un message standard, en l'espèce dans un nom de domaine composé d'une pluralité de labels, les paramètres de qualité de service requis par la plate-forme de services. Les paramètres sont compris dans un premier label du nom de domaines. Ainsi, par rapport à de solutions connues qui consistent à modifier le terminal utilisateur de manière à installer sur celui-ci des modules spécifiques adaptés pour gérer la qualité de service sur le terminal ou pour piloter la qualité de service sur la passerelle, la solution proposée ici ne nécessite aucune modification du terminal utilisateur. Cette solution n'impose donc aucune contrainte supplémentaire à l'environnement de l'utilisateur.

Grâce à la réception de la deuxième requête d'accès au service, la plate-forme de services est informée de la prise en compte par la passerelle réseau des paramètres de qualité de service pour la fourniture du service conformément aux sélections de l'utilisateur. Plus précisément, si la plate-forme reçoit la deuxième requête de service, cela signifie que les paramètres de qualité de service ont été effectivement réservés par la passerelle réseau pour le flux issu/à destination du terminal utilisateur. Le procédé évite ainsi d'éventuels litiges liés à la facturation du service. En effet, le service, commandé par l'utilisateur, n'est délivré au terminal utilisateur que dans le cas où les paramètres de qualité de service nécessaires à cette commande ont pu être garantis par la passerelle réseau. La plate-forme de services facture donc l'utilisateur conformément à ce que l'utilisateur a commandé.

Une requête de résolution d'un nom de domaine est astucieusement utilisée pour transmettre du terminal à la passerelle résidentielle des paramètres de qualité de service comprenant au moins la bande passante nécessaire à l'exécution du service. Le nom de domaine comprend ainsi dans un premier label les paramètres de qualité de service. Le relais DNS de la passerelle résidentielle reçoit la requête et un module de résolution du relais permet d'extraire les paramètres de la requête de manière à ce qu'ils soient pris en compte par la passerelle résidentielle.

Dans un exemple de réalisation, le premier label comprend également une classe de service destinée à accorder une priorité à un flux associé au service dans le réseau local.

La classe de service permet à la passerelle de réserver des ressources sur un lien du réseau local qui permet au terminal d'accéder à Internet et donc d'accéder au service. La classe de service permet ainsi à la plate-forme de fixer une priorité pour le trafic de ce lien.

De façon avantageuse, le premier label comprend également une durée précisant le temps pendant lequel la passerelle réseau doit garantir la réservation de la bande passante.

Préciser dans le label une durée permet d'indiquer à la passerelle résidentielle le temps pendant lequel la configuration en termes de paramètres de qualité de service doit être maintenue pour le flux associé au service délivré au terminal utilisateur et donc le temps pendant lequel le flux associé au service doit être priorisé par rapport à d'autres.

L'invention porte également sur une passerelle réseau selon la revendication 6.

L'invention concerne aussi un message selon la revendication 8.

L'invention porte aussi sur un programme d'ordinateur selon la revendication 9.

L'invention concerne aussi un support de données selon la revendication 10.

D'autres caractéristiques et avantages de la présente invention seront mieux compris de la description et des dessins annexés parmi lesquels :
- la figure 1 est une représentation schématique d'un exemple d'architecture d'un réseau résidentiel, dans laquelle est mise en œuvre le procédé de l'invention ;
- la figure 2 présente les étapes d'un procédé de réservation d'une bande passante dans un réseau résidentiel, selon un exemple de réalisation de l'invention ;
- la figure 3 est une représentation schématique d'une passerelle domestique, selon un exemple de réalisation de l'invention ;
- la figure 4 est une représentation schématique d'une plate-forme de services, selon un exemple de réalisation de l'invention.

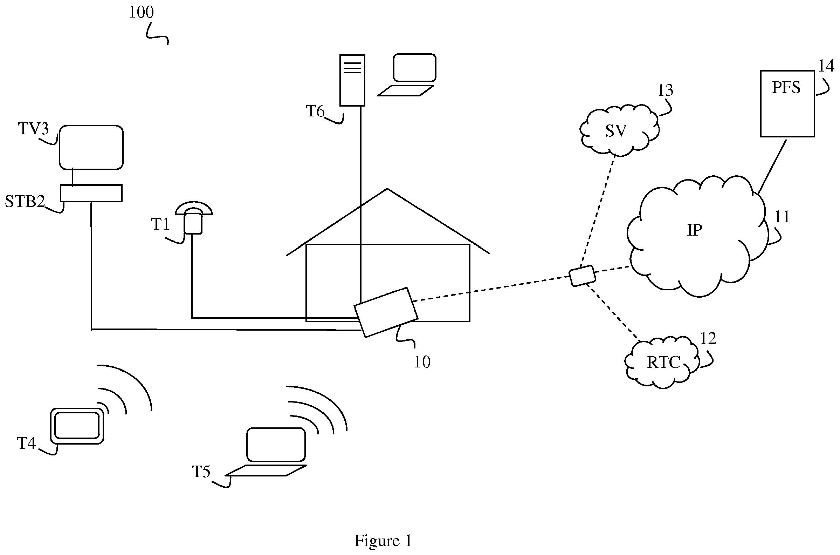

Un exemple d'architecture de réseau dans lequel est mis en œuvre un procédé de réservation de bande passante, selon un exemple de réalisation de l'invention, va maintenant être présenté en relation avec la figure 1.

Une passerelle résidentielle à haut-débit, dite passerelle xDSL 10 (de l'anglais « x Digital Subscriber Line ») est adaptée pour offrir à un utilisateur abonné (non représenté sur la figure 1), une pluralité de services : accès à Internet, téléphonie fixe, télévision. La passerelle résidentielle xDSL 10 offre ainsi à différents équipements T1, STB2, TV3, T4, T5, T6 de l'abonné organisés en un réseau local 100 des fonctions d'accès à différents réseaux, tels que le réseau Internet 11, le réseau téléphonique commuté (ou « RTC ») 12, un ou des serveurs vidéo 13 de fournisseur(s) de contenus. Parmi ces équipements, un téléphone fixe T1 accède au réseau téléphonique commuté 12. Un décodeur TV STB2 (le terme habituellement utilisé est le terme anglais « Set To Box », ou « STB ») est adapté pour permettre l'affichage, sur l'écran d'un téléviseur TV3 d'un contenu multimédia accessible auprès d'un serveur vidéo 13. Il est habituel que pour ce décodeur STB2, la passerelle xDSL 10 garantisse, selon le type de service demandé, un niveau de qualité de service donné par configuration. Par exemple, lorsqu'un utilisateur accède à un service de vidéo à la demande (ou « VoD » pour « Video on Demand » en anglais) et commande un contenu multimédia en Haute Définition (ou « HD », pour « High Définition »), la passerelle xDSL 10 garantit une bande passante suffisante pour que le contenu soit distribué en haute définition. D'autres équipements T4, T5, T6 du réseau résidentiel 100, appelés équipements génériques, ou équipements « OTT » (de l'anglais « Over The Top ») accèdent par exemple à des services Internet via la passerelle xDSL 10. De tels équipements sont par exemple une tablette numérique T4, un PC portable T5, un PC fixe T6. Pour ces équipements génériques T4, T5, T6, la qualité de service est habituellement gérée en mode « best effort » (ou « meilleur effort ») par la passerelle xDSL 10, c'est-à-dire que la passerelle xDSL 10 ne peut pas différencier les flux à destination ou issus de ces terminaux et ne garantit donc aucun niveau de qualité de service à ces équipements.

La passerelle xDSL 10 offre une pluralité de fonctions aux équipements du réseau local 100, telles qu'une fonction d'accès au réseau, en mode filaire ou en mode sans-fil, une fonction de routage de paquets à l'intérieur du réseau local 100 et en provenance ou à destination d'un réseau 11, 12, 13, une fonction de serveur « DHCP » (de l'anglais « Dynamic Host Configuration Protocol »), une fonction de relais « DNS » (de l'anglais « Domain Name System »), etc. La fonction de serveur DHCP est destinée à assurer la configuration automatique des adresses IP privées des équipements IP du réseau local 100. Le système DNS permet d'établir une correspondance entre des noms compréhensibles et faciles à retenir, appelés noms de domaine, ou « FQDN » (de l'anglais « Fully Qualified Domain Name »), par exemple www.monsite.fr, et des adresses IP. A cet effet, la fonction de relais DNS de la passerelle xDSL est destinée à résoudre des noms de domaines requis par des terminaux IP du réseau local 100, soit en fournissant en réponse à une requête une adresse IP mémorisée dans une mémoire cache (non représentée sur la figure 1), soit en requérant la résolution du nom de domaine auprès d'un serveur DNS du réseau Internet (non représenté sur la figure 1). Un nom de domaine comprend habituellement une pluralité de labels séparés par des points, par exemple « A.B.C.D ». Les noms de domaine constituent un espace hiérarchique garantissant l'unicité d'un nom dans une structure hiérarchique. Un domaine est un sous-domaine d'un autre domaine s'il est contenu dans ce domaine. Par exemple, A.B.C.D est un sous-domaine de B.C.D. En parcourant la hiérarchie des noms de domaines dans le sens descendant, on peut également dire que le domaine racine, noté « . » a comme sous-domaine immédiat « D », qui a lui-même comme sous-domaine immédiat « C », etc. On se réfèrera à la RFC IETF 1034 (« Request For Comments » et « Internet Engineering Task Force » en anglais) pour une présentation complète des noms de domaines. Tous les équipements IP du réseau local 100 sont paramétrés de manière à transmettre à la passerelle xDSL 10, plus précisément au relais DNS de la passerelle, les requêtes DNS de résolution de nom de domaine. Ainsi, toute requête DNS en provenance des terminaux est envoyée et traitée par la passerelle xDSL 10.

Un contenu numérique est proposé par une plate-forme de services 14 accessible depuis le réseau Internet 11. Le contenu est habituellement désigné par une adresse universelle, ou « URL » (de l'anglais « Uniform Resource Locator ») et un terminal utilisateur qui souhaite accéder à ce contenu utilise cette adresse universelle pour y accéder. Une telle adresse fournit à la fois une information sur la localisation du contenu et une information sur le protocole associé pour le consommer, c'est-à-dire pour le visualiser dans le cas d'un contenu vidéo. Par exemple, l'adresse est de la forme http://<hôte>/contenu1, indiquant que le contenu est accessible en utilisant le protocole « http » (de l'anglais « HyperText Transfer Protocol »), et où <hôte> désigne un nom de serveur, sous forme d'une adresse IP ou d'un nom de domaine, et contenu1, une adresse du contenu sur le serveur. Le format des adresses universelles URL est défini dans la RFC 1738.

Selon l'exemple de réalisation décrit ici, la passerelle xDSL 10 est agencée pour reconnaître dans un nom de domaine reçu d'un terminal du réseau local 100 lors d'une requête de résolution de nom de domaine, des paramètres de qualité de service, et pour prendre en compte ces paramètres, c'est-à-dire pour extraire ces paramètres du nom de domaine et pour mettre en place une configuration qui permet de garantir au terminal utilisateur un niveau de qualité de service précisé par les paramètres pour les flux à destination ou/et en provenance de ce terminal. A cette fin, la passerelle xDSL 10 comprend des instructions de code pour mettre en œuvre les étapes du procédé de configuration d'une bande passante décrit ici et qui sont exécutées par la passerelle.

De même, la plate-forme de services 14 est agencée pour construire, lors d'une demande d'accès à un contenu issue d'un terminal utilisateur, une adresse universelle qui comprend dans le nom de domaine un label destiné à préciser des paramètres de qualité de service pour le flux associé à la demande d'accès. A cette fin, la plate-forme de services 14 comprend des instructions de code pour mettre en œuvre les étapes du procédé de réservation d'une bande passante décrit ici et qui sont exécutées par la plate-forme de services.

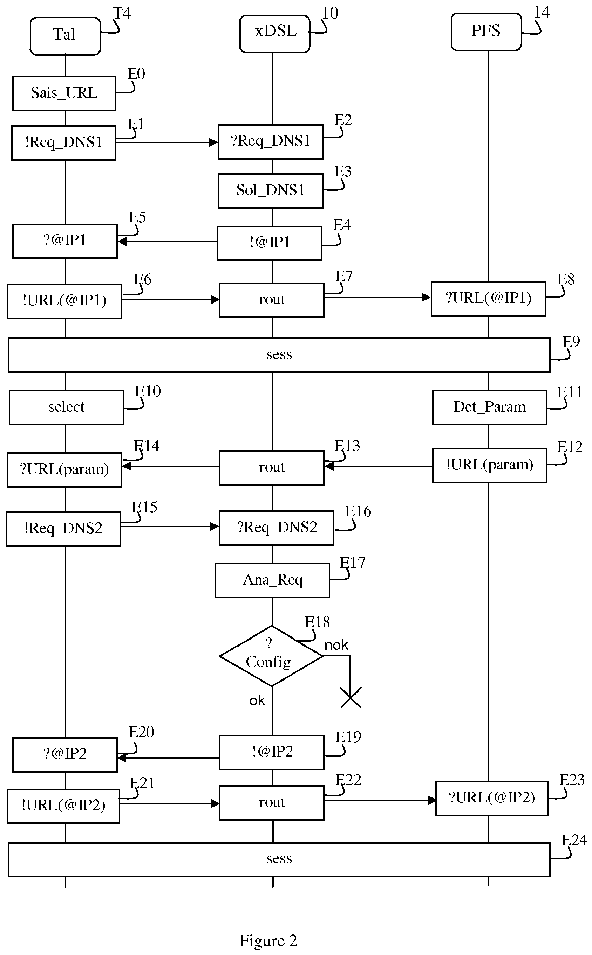

Les étapes d'un procédé de réservation d'une bande passante pour un service délivré par une plate-forme de services et destiné à être exécuté sur un terminal utilisateur dans un réseau local, selon un exemple de réalisation, vont maintenant être décrites en relation avec la figure 2.

On suppose qu'un utilisateur d'un équipement du réseau local 100 souhaite accéder à un service nécessitant un niveau de qualité de service donné depuis un terminal générique dont la qualité de service est habituellement gérée en mode best effort par la passerelle xDSL 10.

Dans une phase préalable de commande, l'utilisateur accède, au moyen d'un navigateur d'un de ses terminaux, par exemple sa tablette numérique T4, à la plate-forme de services 14 via Internet et choisit un contenu multimédia, un mode de visualisation, par exemple HD et valide sa commande. Pour ce faire, dans une étape initiale E0 de saisie, il saisit par exemple une requête http correspondant à l'adresse de la plate-forme de services dans son navigateur. La requête est par exemple de la forme « http://www.PFS.com ».

De manière classique, le terminal T4, paramétré pour demander la résolution des noms de domaine à la passerelle xDSL 10, transmet dans une étape E1 de transmission, une première requête de résolution de nom de domaine au relais DNS de la passerelle xDSL 10 afin d'obtenir l'adresse IP de la plate-forme de services 14. La première requête comprend le nom de domaine à résoudre, c'est-à-dire « www.PFS.com ». La première requête est reçue par la passerelle xDSL 10 dans une étape E2 de réception.

Dans une étape E3 de résolution et de réponse, le relais DNS de la passerelle xDSL 10, résout le nom de domaine et transmet au terminal T4, en réponse à la première requête de résolution de nom de domaine, l'adresse IP correspondante. Dans un premier cas de résolution, le nom de domaine a été récemment résolu par le relais DNS et l'adresse IP figure dans une mémoire cache (non représentée sur la figure 1) de la passerelle xDSL 10. Dans un deuxième cas de résolution, l'adresse IP n'est pas mémorisée en mémoire cache et est obtenue par le relais DNS de la passerelle xDSL 10 après envoi de la première requête pour résolution à un serveur DNS du réseau IP. L'adresse IP de la plate-forme de services 14 est envoyée par la passerelle xDSL 10 au terminal T4 dans une étape E4 d'envoi. Elle est reçue par le terminal T4 dans une étape E5 de réception.

Dans une étape E6 d'accès à la plate-forme de services, le terminal T4 envoie une première requête d'accès au service sous forme d'un ou plusieurs paquets IP. Le paquet IP comprend l'adresse universelle URL de la plate-forme de services et dans le champ destination du paquet, l'adresse IP obtenue précédemment. Le paquet est routé par la passerelle xDSL 10 dans une étape E7 de routage. Il est reçu par la plate-forme de services 14 dans une étape E8 de réception.

Dans une étape E9 d'affichage et de commande, une page d'accès au service s'affiche alors sur l'écran du terminal T4 de l'utilisateur, une session étant établie entre le terminal T4 et la plate-forme de services 14. L'utilisateur choisit alors un contenu et le cas échéant des paramètres spécifiques de visualisation. Par exemple, dans le cas d'un contenu multimédia, l'utilisateur du terminal T4 sélectionne le mode de résolution HD. Il valide ses choix au terme d'une étape E10 de sélection.

Dans une étape suivante E11 de détermination de paramètres de qualité de service, la plate-forme de services 14 détermine, à partir des choix de l'utilisateur, un ensemble de paramètres de qualité de service destinés à la passerelle xDSL 10. Plus précisément, ces paramètres sont destinés à permettre à la passerelle xDSL de mettre en place une configuration propre au contenu multimédia choisi et conforme aux sélections de l'utilisateur en termes de qualité de service. Grâce à ces paramètres, la passerelle xDSL 10 doit pouvoir prioriser le flux propre à ce contenu par rapport à d'autres flux moins prioritaires du réseau résidentiel 100. Ainsi, un contenu que l'utilisateur aura choisi et payé en conséquence sera assuré de bénéficier de ressources nécessaires à l'intérieur du réseau local 100. L'ensemble des paramètres qui peut être déterminé par la plate-forme de services 14 à partir des choix de l'utilisateur comprend par exemple un débit minimal, ou bande passante BR à garantir sur le canal par lequel le contenu multimédia va transiter, une classe de service CoS pour le contenu multimédia. La classe de service CoS peut être définie par une priorité à donner à un flux à l'intérieur du réseau local 100 par la passerelle xDSL 10. Par exemple, cette priorité est conforme à des standards « IEEE » (de l'anglais « Institue of Electronic and Electronics Engineers »), tels que 802.1p, 802.3, etc. qui définissent huit classes de service différentes dans le réseau local 100, telles que « BE » (pour « Best Effort »), « VI » (pour « Video »), « VO » (pour « Voice »), etc. Dans un autre exemple de réalisation, la classe de service peut être définie au moyen d'un taux d'échantillonnage TE correspondant à un encodage particulier de données circulant à l'extérieur du réseau local 100, c'est-à-dire entre la plate-forme de services 14 et la passerelle xDSL 10. Un exemple de taux d'échantillonnage TE est « CBR » (de l'anglais « Constant Bit Rate »), adapté à une diffusion de contenu en continu (le terme habituellement utilisé est le terme anglais « streaming »). Un autre paramètre de qualité de service consiste en une durée T pendant laquelle les ressources de qualité de service doivent être réservées sur le canal. Préciser la durée T est avantageux car ce paramètre permet de limiter dans le temps la réservation de certaines ressources. Ainsi, si la configuration mise en place pour le flux prioritaire pénalise d'autres flux, c'est-à-dire si d'autres flux nécessitent d'être dégradés au bénéfice du flux multimédia correspondant à la sélection de l'utilisateur, la durée pendant laquelle le flux est priorisé au détriment d'autres flux est limitée dans le temps. La durée T est par exemple égale à la durée du contenu multimédia. Dans une variante de réalisation, la durée est supérieure à la durée du contenu. Elle est majorée par exemple de 25% de la durée du contenu de manière à tenir compte d'éventuelles mises en pause par l'utilisateur lors de la lecture du contenu.

Dans une étape E12 de construction de l'adresse universelle et d'envoi, la plate-forme de services 14 construit une adresse universelle du contenu sélectionné par l'utilisateur qui comprend les paramètres de qualité de service déterminés au cours de l'étape précédente E11. Par exemple, l'adresse universelle est de la forme: « http://QoSv1_BR-2000_CoS-VIT-180.www.PFS.com/ValidateQoS?ID ». Ainsi, les paramètres de qualité de service déterminés par la plate-forme de service 14 sont précisés dans la partie de l'adresse universelle qui définit le nom de l'hôte, ou nom de domaine, composé de labels séparés par un point. Ils figurent dans un label du nom de domaine associé à la plate-forme 14. L'adresse universelle ainsi construite est destinée à permettre au terminal d'acheminer des paramètres de qualité de service à la passerelle xDSL 10 de manière transparente. La dernière partie de l'adresse universelle, ici « ValidateQoS?ID », indique une adresse sur le serveur, ici, une page de validation sur la plate-forme de services. Si le terminal T4 accède à cette page, alors la plate-forme de services 14 est assurée que les paramètres définis dans un label du nom de domaine de l'adresse universelle ont été pris en compte par la plate-forme xDSL 10. L'adresse universelle ainsi construite est envoyée par la plate-forme de services 14 au terminal T4 en fin d'étape E12. L'adresse universelle est routée par la passerelle xDSL 10 au cours d'une étape E13 de routage et reçue par le terminal T4 au cours d'une étape E14 de réception.

Dans une étape E15 d'envoi d'une deuxième requête de résolution, le terminal T4, paramétré pour demander à la passerelle xDSL, plus précisément au relais DNS de la passerelle xDSL 10, la résolution de noms de domaine, envoie une deuxième requête DNS qui comprend la partie hôte de l'adresse universelle, en l'espèce « QoSv1_BR-2000_CoS-VI_T-180.www.PFS.com » afin d'obtenir en réponse l'adresse IP de la machine sur laquelle se trouve le contenu multimédia que l'utilisateur a commandé. La deuxième requête DNS est reçue par la passerelle xDSL, plus précisément par le relais DNS de la passerelle 10, dans une étape E16 de réception.

Dans une étape E17 d'analyse de la requête DNS et de configuration, la passerelle xDSL, plus précisément le relais DNS de la passerelle xDSL 10, analyse la deuxième requête DNS reçue. Une telle analyse est mise en œuvre par un module de résolution du relais DNS de la passerelle xDSL 10. Le module de résolution identifie qu'un label du nom de domaine se rapporte à des paramètres de qualité de service. Par exemple, le module de résolution est adapté pour reconnaître un mot-clé, par exemple « QoS ». Le premier label du nom de domaine est ainsi extrait du nom de l'hôte et transmis à la passerelle xDSL 10. La passerelle xDSL 10 traite les paramètres de qualité de service qui sont précisés dans le premier label du nom de domaine. Plus précisément, la passerelle xDSL 10 réserve, si elle peut, une bande passante de 2000kbits/s avec une classe de service CoS VI, correspondant à une priorité associée au trafic à destination/en provenance du terminal T4 dans le réseau local 100, pendant une durée de 180 minutes pour le flux à destination/en provenance du terminal T4. Dans une étape E18 de vérification, la passerelle xDSL 10 vérifie que les paramètres ont pu être fixés, conformément aux valeurs précisées dans le premier label du nom de domaine. Si c'est le cas, (branche « ok » sur la figure 1), le relais DNS de la passerelle 10 envoie l'adresse IP associée au nom du serveur formé par les labels suivants du nom de domaine, ici www.PFS.com dans une étape E19 d'envoi de l'adresse. Comme précédemment, soit l'adresse IP est mémorisée en mémoire cache de la passerelle xDSL 10, soit il demande la résolution du nom à un serveur DNS du réseau IP. L'adresse IP est reçue par le terminal dans une étape E20 de réception.

Dans une étape E21 d'accès à la plate-forme de services, le terminal T4 envoie une deuxième requête d'accès au service sous forme d'un ou plusieurs paquets IP. Le paquet IP comprend l'adresse universelle URL de la plate-forme de services 14 et dans le champ destination du paquet, l'adresse IP de la plate-forme de services 14 reçue au cours de l'étape de réception E20. Le paquet est routé par la passerelle xDSL 10 dans une étape E22 de routage et reçu par la plate-forme de services 14 dans une étape E23 de réception.

Dans une étape E24 de validation, le terminal T4 accède à une page de validation de sa commande. Cette validation est destinée d'une part à informer l'utilisateur qu'il peut accéder au contenu conformément aux sélections qu'il a faites. D'autre part, la plate-forme de services, en recevant le paquet au cours de l'étape E23, est assurée à ce stade que les paramètres de qualité de service qu'elle a envoyés au terminal T4 au cours de l'étape E12 ont été pris en compte par la passerelle xDSL 10 et que le contenu peut être distribué avec la qualité de service requise. Ainsi, le procédé évite toute contestation liée à la facturation du service. En effet, la facturation pour le service délivré par la plate-forme de services 14 est fonction de la qualité de service effectivement rendue et non pas uniquement fonction de la qualité de service requise par l'utilisateur.

Dans un cas où la passerelle xDSL 10 n'a pas pu fixer les paramètres de qualité de service compris dans le premier label de l'adresse universelle de la plate-forme de services 14, par exemple, si la passerelle n'a pas pu réserver la bande passante demandée, alors (branche « nok » sur la figure 1), elle envoie, par l'intermédiaire du relais DNS, une erreur DNS destinée à indiquer que la résolution d'adresse IP a échoué. Dans un autre exemple de réalisation, la passerelle xDSL 10 envoie, en réponse à la deuxième requête DNS, une adresse IP spécifique qu'elle a préalablement configurée et qui permet au terminal utilisateur T4 d'accéder à une page d'erreur indiquant que le paramétrage de la passerelle est incompatible avec les choix de l'utilisateur. Cet exemple de réalisation a l'avantage de fournir un message explicite à l'utilisateur du terminal. Dans les deux cas, le procédé s'arrête.

Le procédé est décrit ici dans le cas d'une passerelle résidentielle xDSL. L'invention n'est pas limitée à ce type de passerelle et est applicable à des passerelles réseau offrant d'autres types d'accès, par exemple un accès fibre optique.

Dans l'exemple de réalisation décrit, la deuxième requête DNS, envoyée par le terminal utilisateur T4 à la passerelle xDSL 10 est de la forme « QoSv1_BR-2000_CoS-VI_T-180.www.PFS.com ». Ici, la plate-forme de services 14 a fixé la classe de service à une priorité à fixer dans le réseau local 100. Dans un autre exemple de réalisation, la plate-forme de services 14 défini la classe de service comme un taux d'échantillonnage TE. La deuxième requête DNS est alors par exemple de la forme « QoSv1_BR-2000_TE-CBR_T-180.www.PFS.com ». Dans ce cas, lors de l'étape E17 d'analyse et de configuration, la passerelle xDSL 10 associe au flux en provenance/à destination du terminal T4 dans le réseau local 100, une priorité compatible avec le taux d'échantillonnage TE.

Dans l'exemple de réalisation décrit ici, le terminal utilisateur T4 est une tablette numérique. L'invention n'est bien sûr pas limitée à ce type de terminal et s'applique également lorsque l'utilisateur accède à la plate-forme de services 14 depuis d'autres équipements génériques, tels qu'un PC portable, un PC fixe, une console de jeu avec accès à Internet, un téléphone IP, etc.

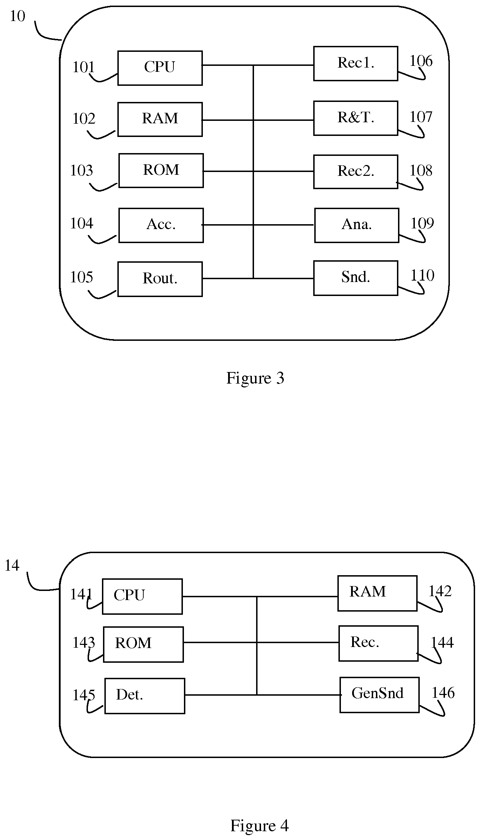

Une passerelle xDSL 10, selon un exemple de réalisation de l'invention, va maintenant être décrite en relation avec la figure 3. La passerelle xDSL 10 est une passerelle réseau à interface ADSL à haut débit qui permet d'accéder simultanément à différents types de service : Internet, services de téléphonie, services supplémentaires tels que la TV, la Vidéo à la Demande. La passerelle xDSL 10 est un équipement informatique qui comprend :
- un microprocesseur 101, ou « CPU » (de l'anglais «Central Processing Unit »), destiné à charger des instructions en mémoire, à les exécuter, à effectuer des opérations ;
- un ensemble de mémoires, dont une mémoire volatile 102, ou « RAM » (pour « Random Access Memory ») utilisée pour exécuter des instructions de code, stocker des variables, etc., une mémoire de stockage 103 de type « ROM » ou « EEPROM » (de l'anglais « Read Only Memory » et « « Electronically-Erasable Programmable Read-Only Memory »). La mémoire de stockage 103 est agencée pour mémoriser une application qui comprend des instructions de code pour mettre en œuvre les étapes du procédé de configuration d'une bande passante pour l'exécution d'un service sur un terminal utilisateur. La mémoire de stockage 103 est également agencée pour mémoriser une configuration de paramètres de qualité de services pour des flux issus/en provenance de terminaux du réseau local 100 ;
- un module d'accès 104, agencé pour offrir aux terminaux du réseau local 100 un accès réseau. Le module d'accès 104 offre ainsi différents types d'accès dans le réseau local : accès sans fil, selon différents protocoles, par exemple Wifi, BlueTooth, accès filaire via port USB, port Ethernet, etc. ;
- un module de routage 105, agencé pour router des paquets à l'intérieur du réseau local 100 et en provenance ou à destination des terminaux du réseau local vers ou depuis le réseau Internet ;

La passerelle xDSL 10 comprend également :
- des premiers moyens de réception 106, agencés pour recevoir une première requête d'accès à un service en provenance du terminal utilisateur, ladite requête étant destinée à sélectionner le service. Les premiers moyens de réception 106 sont agencés pour mettre en œuvre l'étape E7 du procédé de réservation d'une bande passante décrit précédemment,
- des moyens de réception et de transmission 107, agencés pour recevoir en provenance de la plate-forme de services, après sélection du service depuis le terminal utilisateur, et pour transmettre au terminal utilisateur, une adresse universelle du service sélectionné comprenant un nom de domaine, ledit nom de domaine comprenant dans un premier label au moins un paramètre définissant un paramètre de qualité de service nécessaire pour l'exécution du service sélectionné et des labels suivants formant un nom de la plate-forme de services. Un exemple de paramètre de qualité de service est la bande passante nécessaire au service. Les moyens de réception et de transmission 107 sont agencés pour mettre en œuvre l'étape E13 de routage du procédé décrit précédemment,

- des deuxièmes moyens de réception 108, agencés pour recevoir en provenance du terminal une requête de résolution du nom de domaine. Les deuxièmes moyens de réception 108 sont agencés pour mettre en œuvre l'étape E16 de réception du procédé décrit précédemment,
- des moyens 109 d'analyse du nom de domaine et de configuration, agencés pour analyser le nom de domaine reçu dans la requête de résolution de nom de domaine et pour configurer la plate-forme en termes de qualité de service, c'est-à-dire en fonction du au moins un paramètres de qualité de service compris dans le premier label de l'adresse universelle. La configuration consiste ainsi au moins à réserver la bande passante nécessaire à l'exécution du service pour un flux compris entre le terminal et la plate-forme de services, ladite bande passante étant comprise dans le premier label du nom de domaine. Les moyens 109 d'analyse et de configuration sont agencés pour mettre en œuvre l'étape E17 d'analyse et de configuration du procédé décrit précédemment,
- des moyens d'envoi 110, agencés pour envoyer l'adresse IP de la plate-forme de services au terminal. Les moyens d'envoi 110 sont agencé spour mettre en eouvre l'étape E19 d'envoi de l'adresse du procédé décrit précédemment.

Les modules 104 d'accès, 105 de routage, les premiers moyens de réception 106, les moyens de réception et de transmission 107, les deuxième moyens de réception 108, les moyens 109 d'analyse du nom de domaine et de configuration et les moyens d'envoi 110 sont de préférence des modules logiciels comprenant des instructions logicielles pour faire exécuter les étapes du procédé de configuration d'une bande passante pour l'exécution d'un service sur un terminal utilisateur précédemment décrit.

L'invention concerne donc aussi :
- un programme d'ordinateur comportant des instructions pour la mise en œuvre du procédé de configuration tel que décrit précédemment lorsque ce programme est exécuté par un processeur de la passerelle xDSL 10 ;
- un support d'enregistrement lisible sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal ou un réseau de télécommunications.

Une plate-forme de services 14, selon un exemple de réalisation de l'invention, va maintenant être décrite en relation avec la figure 4.

La plate-forme de services 14 est un serveur informatique destiné à proposer à des utilisateurs qui y accèdent à distance via le réseau Internet des services, tels que des contenus multimédia. La plate-forme de services 14 comprend :
- un microprocesseur 141, destiné à charger des instructions en mémoire, à les exécuter, à effectuer des opérations ;
- un ensemble de mémoires, dont une mémoire volatile 142 de type RAM, utilisée pour exécuter des instructions de code, stocker des variables, etc., une mémoire de stockage 143 de type ROM ou EEPROM. La mémoire de stockage 143 est agencée pour mémoriser une application qui comprend des instructions de code pour mettre en œuvre les étapes du procédé de réservation d'une bande passante pour un service délivré par la plate-forme de services 14. La mémoire de stockage 143 est également agencée pour mémoriser des contenus multimédias destinés à être proposés à des utilisateurs ;

La plate-forme de services 14 comprend également :
- des moyens de réception 144, agencés pour recevoir une première requête d'accès au service, en provenance du terminal utilisateur via la passerelle xDSL 10, ladite requête étant destinée à sélectionner un service offert par la plate-forme de services. Les moyens de réception 144 sont agencés pour mettre en œuvre l'étape E8 de réception du procédé de réservation d'une bande passante décrit précédemment,
- des moyens de détermination 145, agencés pour déterminer au moins un paramètre de qualité de service, ledit paramètre définissant une bande passante nécessaire pour l'exécution du service sélectionné. Les moyens de détermination 145 sont agencés pour mettre en œuvre l'étape E11 du procédé décrit précédemment,
- des moyens 146 de génération et d'envoi, agencés pour générer une adresse universelle du service sélectionné depuis le terminal utilisateur, ladite adresse comprenant un nom de domaine, ledit nom de domaine comprenant dans un premier label au moins un paramètre définissant une bande passante nécessaire pour l'exécution du service sélectionné, et des labels suivants formant un nom de la plate-forme de services. Les moyens 146 de génération et d'envoi sont également agencés pour envoyer l'adresse universelle ainsi construite au terminal utilisateur via la passerelle xDSL. Les moyens 146 de génération et d'envoi sont agencés pour mettre en œuvre l'étape E12 de construction de l'adresse universelle et d'envoi du procédé décrit précédemment.

Les moyens 144 de réception, 145 de détermination et 146 de génération et d'envoi sont de préférence des modules logiciels comprenant des instructions logicielles pour faire exécuter les étapes du procédé de réservation d'une bande passante précédemment décrit.

L'invention concerne donc aussi :
- un programme d'ordinateur comportant des instructions pour la mise en œuvre du procédé de réservation d'une bande passante tel que décrit précédemment lorsque ce programme est exécuté par un processeur de la plate-forme de services 14 ;
- un support d'enregistrement lisible sur lequel est enregistré le programme d'ordinateur décrit ci-dessus.

## Revendications

1. Procédé de configuration par une passerelle réseau (10) d'un réseau local (100) d'une bande passante dans le réseau local pour l'exécution d'un service sur un terminal utilisateur (T4) dudit réseau local, ledit service étant délivré par une plate-forme de services (14), ledit procédé comprenant les étapes suivantes, mises en œuvre par la passerelle réseau :
- réception (E2) en provenance du terminal utilisateur d'une première requête de résolution de nom de domaine destinée à obtenir l'adresse IP de la plate-forme de service,
- résolution (E3) d'un premier nom de domaine et envoi (E4) au terminal utilisateur de l'adresse IP correspondante,
- routage (E7) d'une première requête d'accès au service, en provenance du terminal utilisateur et à destination de la plate-forme de services, ladite requête comprenant l'adresse IP de la plate-forme de service et étant destinée à sélectionner le service,
- après sélection (E10) du service depuis le terminal auprès de la plate-forme de services, routage (E13) d'une adresse universelle du service sélectionné, en provenance de la plate-forme de services au terminal, ladite adresse universelle comprenant un deuxième nom de domaine, ledit deuxième nom de domaine comprenant dans un premier label au moins un paramètre définissant une bande passante nécessaire pour l'exécution du service sélectionné, et des labels suivants formant un nom de la plate-forme de services,
- réception (E16) en provenance du terminal d'une deuxième requête de résolution de nom de domaine, ladite deuxième requête de résolution comprenant ledit deuxième nom de domaine,
- analyse (E17) de la deuxième requête de résolution de nom de domaine et réservation de la bande passante nécessaire à l'exécution du service pour un flux compris entre le terminal et la plate-forme de services, ladite bande passante étant comprise dans le premier label du deuxième nom de domaine,
- envoi (E19) au terminal de l'adresse IP associée au nom de la plate-forme de services formé par lesdits labels suivants.

2. Procédé selon la revendication 1, dans lequel le premier label comprend également une classe de service destinée à accorder une priorité à un flux associé au service dans le réseau local.

3. Procédé selon l'une des revendications précédentes, dans lequel le premier label comprend également une durée précisant le temps pendant lequel la passerelle réseau doit garantir la réservation de la bande passante.

4. Procédé selon l'une des revendications précédentes comprenant les étapes suivantes mises en œuvre par la plate-forme de services :
- réception (E8) par la plate-forme de services de la première requête d'accès au service, en provenance du terminal utilisateur,
- après sélection du service, détermination (E11) par la plate-forme de services dudit au moins un paramètre définissant une bande passante nécessaire pour l'exécution du service sélectionné,
- génération et envoi (E12) par la plate-forme de services au terminal via la passerelle réseau de l'adresse universelle du service sélectionné.

5. Procédé selon la revendication 4, comprenant la réception (E23) d'une deuxième requête d'accès audit service, ladite réception étant représentative de la réservation effective par la passerelle réseau de la bande passante nécessaire à l'exécution du service.

6. Passerelle réseau (10) d'un réseau local (100), ledit réseau comprenant au moins un terminal utilisateur (T4), un utilisateur dudit terminal souhaitant accéder à un service délivré par une plate-forme de service (14), la passerelle comprenant :
- des moyens de réception, agencés pour recevoir en provenance du terminal utilisateur une première requête de résolution de nom de domaine destinée à obtenir l'adresse IP de la plate-forme de service,
- des moyens de résolution de nom de domaine et d'envoi, agencés pour résoudre un premier nom de domaine et pour envoyer au terminal utilisateur l'adresse IP correspondante,- des premiers moyens de routage (106), agencés pour router une première requête d'accès au service, en provenance du terminal utilisateur et à destination de la plate-forme de services, ladite requête comprenant l'adresse IP de la plate-forme de service et étant destinée à sélectionner le service, - des seconds moyens de routage (107), agencés pour router, après sélection du service depuis le terminal auprès de la plate-forme de service, une adresse universelle du service sélectionné en provenance de la plate-forme de service au terminal, ladite adresse universelle comprenant un deuxième nom de domaine, ledit deuxième nom de domaine comprenant dans un premier label au moins un paramètre définissant une bande passante nécessaire pour l'exécution du service sélectionné, et des labels suivants formant un nom de la plate-forme de services, - des moyens de réception (108), agencés pour recevoir en provenance du terminal une deuxième requête de résolution de nom de domaine, ladite deuxième requête de résolution comprenant ledit deuxième nom de domaine,- des moyens (109) d'analyse de nom de domaine et de configuration, agencés pour analyser la deuxième requête de résolution de nom de domaine et réserver la bande passante nécessaire à l'exécution du service pour un flux compris entre le terminal et la plate-forme de services, ladite bande passante étant comprise dans le premier label du deuxième nom de domaine,
- des moyens d'envoi (110), agencés pour envoyer au terminal l'adresse IP associée au nom de la plate-forme de services formé par lesdits labels suivants.

7. Système comprenant une passerelle réseau selon la revendication 6 et une plate-forme de services (14) d'un réseau, destinée à délivrer au moins un service à au moins un terminal utilisateur (T4) d'un réseau local (100) via une passerelle réseau (10), ladite plate-forme de services comprenant :
- des moyens de réception (144), agencés pour recevoir une première requête d'accès au service, en provenance du terminal utilisateur via la passerelle réseau, ladite requête étant destinée à sélectionner un service offert par la plate-forme de services,
- des moyens de détermination (145), agencés pour déterminer au moins un paramètre définissant une qualité de service pour l'exécution du service sélectionné,
- des moyens (146) de génération et d'envoi, agencés pour générer et pour envoyer au terminal utilisateur via la passerelle réseau une adresse universelle du service sélectionné depuis le terminal utilisateur, ladite adresse comprenant un nom de domaine, ledit nom de domaine comprenant dans un premier label au moins un paramètre définissant une bande passante nécessaire pour l'exécution du service sélectionné, et d'autres labels formant un nom de la plate-forme de services.

8. Message destiné à être transmis d'une plate-forme de services (14) à un terminal utilisateur (T4) via une passerelle réseau (10), suite à une réception par la plate-forme d'une première requête d'accès au service et d'une sélection du service depuis le terminal utilisateur, ledit message comprenant un nom de domaine comprenant dans un premier label au moins un paramètre définissant une bande passante nécessaire à l'exécution d'un service sélectionné sur la plate-forme de services et dans d'autres labels un nom de la plate-forme de services, le nom de domaine étant destiné à être transmis du terminal à la passerelle réseau dans une requête de résolution de nom de domaine, le premier label étant destiné à réserver la bande passante nécessaire à l'exécution du service au niveau de la passerelle réseau.

9. Programme d'ordinateur destiné à être installé dans une mémoire d'une passerelle réseau, comprenant des instructions pour la mise en œuvre des étapes du procédé de configuration par une passerelle réseau d'une bande passante selon l'une des revendications 1 à 3, lorsque le programme est exécuté par un processeur de la passerelle réseau.

10. Support de données sur lequel est enregistré le programme selon la revendication 9.

## Patentansprüche

1. Verfahren zur Konfiguration, durch ein Netzwerk-Gateway (10) eines lokalen Netzwerks (100), einer Bandbreite in dem lokalen Netzwerk zur Ausführung eines Dienstes auf einem Benutzerendgerät (T4) des lokalen Netzwerks, wobei der Dienst durch eine Diensteplattform (14) bereitgestellt wird, wobei das Verfahren die folgenden Schritte beinhaltet, die durch das Netzwerk-Gateway implementiert werden:
- Empfangen (E2), von dem Benutzerendgerät, einer ersten Anforderung nach Auflösung eines Domänennamens, die dazu bestimmt ist, die IP-Adresse der Diensteplattform zu erhalten,
- Auflösen (E3) eines ersten Domänennamens und Senden (E4) der entsprechenden IP-Adresse an das Benutzerendgerät,
- Weiterleiten (E7) einer ersten Anforderung nach Zugriff auf den Dienst von dem Benutzerendgerät an die Diensteplattform, wobei die Anforderung die IP-Adresse der Diensteplattform beinhaltet und dazu bestimmt ist, den Dienst auszuwählen,
- nach dem Auswählen (E10) des Dienstes durch das Endgerät gegenüber der Diensteplattform, Weiterleiten (E13) einer URL-Adresse des ausgewählten Dienstes von der Diensteplattform an das Endgerät, wobei die URL-Adresse einen zweiten Domänennamen beinhaltet, wobei der zweite Domänenname in einem ersten Label mindestens einen Parameter beinhaltet, der eine zur Ausführung des ausgewählten Dienstes notwendige Bandbreite definiert, und nachfolgende Labels einen Namen der Diensteplattform bilden,
- Empfangen (E16), von dem Endgerät, einer zweiten Anforderung nach Auflösung eines Domänennamens, wobei die zweite Auflösungsanforderung den zweiten Domänennamen beinhaltet,
- Analysieren (E17) der zweiten Anforderung nach Auflösung eines Domänennamens und Reservieren der zur Ausführung des Dienstes notwendigen Bandbreite für einen Strom zwischen dem Endgerät und der Diensteplattform, wobei die Bandbreite in dem ersten Label des zweiten Domänennamens enthalten ist,
- Senden (E19), an das Endgerät, der IP-Adresse, die mit dem Namen der Diensteplattform, der durch die nachfolgenden Labels gebildet wird, assoziiert ist.

2. Verfahren nach Anspruch 1, wobei das erste Label auch eine Dienstklasse beinhaltet, die dazu bestimmt ist, einem Strom, der mit dem Dienst assoziiert ist, eine Priorität in dem lokalen Netzwerk einzuräumen.

3. Verfahren nach einem der vorhergehenden Ansprüche, wobei das erste Label auch eine Dauer beinhaltet, die die Zeit angibt, während der das Netzwerk-Gateway die Reservierung der Bandbreite garantieren muss.

4. Verfahren nach einem der vorhergehenden Ansprüche, das die folgenden Schritte beinhaltet, die durch die Diensteplattform implementiert werden:
- Empfangen (E8), durch die Diensteplattform von dem Benutzerendgerät, der ersten Anforderung nach Zugriff auf den Dienst,
- nach dem Auswählen des Dienstes, Bestimmen (E11), durch die Diensteplattform, des mindestens einen Parameters, der eine zur Ausführung des ausgewählten Dienstes notwendige Bandbreite definiert,
- Erzeugen und Senden (E12), durch die Diensteplattform über das Netzwerk-Gateway an das Endgerät, der URL-Adresse des ausgewählten Dienstes.

5. Verfahren nach Anspruch 4, das das Empfangen (E23) einer zweiten Anforderung nach Zugriff auf den Dienst beinhaltet, wobei das Empfangen die tatsächliche Reservierung der zur Ausführung des Dienstes notwendigen Bandbreite durch das Netzwerk-Gateway darstellt.

6. Netzwerk-Gateway (10) eines lokalen Netzwerks (100), wobei das Netzwerk mindestens ein Benutzerendgerät (T4) beinhaltet, wobei ein Benutzer des Endgeräts auf einen durch eine Diensteplattform (14) bereitgestellten Dienst zugreifen möchte, wobei das Gateway Folgendes beinhaltet:
- Empfangsmittel, die dazu angeordnet sind, eine erste Anforderung nach Auflösung eines Domänennamens von dem Benutzerendgerät zu empfangen, die dazu bestimmt ist, die IP-Adresse der Diensteplattform zu erhalten,
- Mittel zum Auflösen eines Domänennamens und zum Senden, die dazu angeordnet sind, einen ersten Domänennamen aufzulösen und die entsprechende IP-Adresse an das Benutzerendgerät zu senden,
- erste Mittel zum Weiterleiten (106), die dazu angeordnet sind, eine erste Anforderung nach Zugriff auf den Dienst von dem Benutzerendgerät an die Diensteplattform weiterzuleiten, wobei die Anforderung die IP-Adresse der Diensteplattform beinhaltet und dazu bestimmt ist, den Dienst auszuwählen,
- zweite Mittel zum Weiterleiten (107), die dazu angeordnet sind, nach dem Auswählen des Dienstes durch das Endgerät gegenüber der Diensteplattform eine URL-Adresse des ausgewählten Dienstes von der Diensteplattform an das Endgerät weiterzuleiten, wobei die URL-Adresse einen zweiten Domänennamen beinhaltet, wobei der zweite Domänenname in einem ersten Label mindestens einen Parameter beinhaltet, der eine zur Ausführung des ausgewählten Dienstes notwendige Bandbreite definiert, und die nachfolgenden Labels einen Namen der Diensteplattform bilden,
- Empfangsmittel (108), die dazu angeordnet sind, eine zweite Anforderung nach Auflösung eines Domänennamens von dem Endgerät zu empfangen, wobei die zweite Auflösungsanforderung den zweiten Domänennamen beinhaltet,
- Mittel (109) zum Analysieren eines Domänennamens und zum Konfigurieren, die dazu angeordnet sind, die zweite Anforderung nach Auflösung eines Domänennamens zu analysieren und die zur Ausführung des Dienstes notwendige Bandbreite für einen Strom zwischen dem Endgerät und der Diensteplattform zu reservieren, wobei die Bandbreite in dem ersten Label des zweiten Domänennamens enthalten ist,
- Mittel zum Senden (110), die dazu angeordnet sind, die IP-Adresse, die mit dem Namen der Diensteplattform, der durch die nachfolgenden Labels gebildet wird, assoziiert ist, an das Endgerät zu senden.

7. System, beinhaltend ein Netzwerk-Gateway nach Anspruch 6 und eine Diensteplattform (14) eines Netzwerks, die dazu bestimmt ist, mindestens einem Benutzerendgerät (T4) eines lokalen Netzwerks (100) über ein Netzwerk-Gateway (10) einen Dienst bereitzustellen, wobei die Diensteplattform Folgendes beinhaltet:
- Empfangsmittel (144), die dazu angeordnet sind, eine erste Anforderung nach Zugriff auf den Dienst über das Netzwerk-Gateway von dem Benutzerendgerät zu empfangen, wobei die Anforderung dazu bestimmt ist, einen durch die Diensteplattform angebotenen Dienst auszuwählen,
- Mittel zum Bestimmen (145), die dazu angeordnet sind, mindestens einen Parameter, der eine zur Ausführung des ausgewählten Dienstes notwendige Dienstqualität definiert, zu bestimmen,
- Mittel (146) zum Erzeugen und Senden, die dazu angeordnet sind, eine URL-Adresse des durch das Benutzerendgerät ausgewählten Dienstes zu erzeugen und über das Netzwerk-Gateway an das Benutzerendgerät zu senden, wobei die Adresse einen Domänennamen beinhaltet, wobei der Domänenname in einem ersten Label mindestens einen Parameter beinhaltet, der eine zur Ausführung des ausgewählten Dienstes notwendige Bandbreite definiert, und andere Labels einen Name der Diensteplattform bilden.

8. Nachricht, die dazu bestimmt ist, im Anschluss an einen Empfang, durch die Plattform, einer ersten Anforderung nach Zugriff auf den Dienst und einer Auswahl des Dienstes durch das Benutzerendgerät, von einer Diensteplattform (14) über ein Netzwerk-Gateway (10) an ein Benutzerendgerät (T4) übertragen zu werden, wobei die Nachricht einen Domänennamen beinhaltet, der in einem ersten Label mindestens einen Parameter, der eine zur Ausführung eines ausgewählten Dienstes auf der Diensteplattform notwendige Bandbreite definiert, und in anderen Labels einen Namen der Diensteplattform beinhaltet, wobei der Domänenname dazu bestimmt ist, in einer Anforderung nach Auflösung eines Domänennamens von dem Endgerät an das Netzwerk-Gateway übertragen zu werden, wobei das erste Label dazu bestimmt ist, die zur Ausführung des Dienstes notwendige Bandbreite beim Netzwerk-Gateway zu reservieren.

9. Computerprogramm, das dazu bestimmt ist, in einem Speicher eines Netzwerk-Gateways installiert zu sein, und das Anweisungen zur Implementierung der Schritte des Verfahrens zur Konfiguration einer Bandbreite durch ein Netzwerk-Gateway nach einem der Ansprüche 1 bis 3 beinhaltet, wenn das Programm durch einen Prozessor des Netzwerk-Gateways ausgeführt wird.

10. Datenträger, auf dem das Programm nach Anspruch 9 aufgezeichnet ist.

## Claims

1. Method for configuration, by a network gateway (10) of a local network (100), of a bandwidth in the local network for the execution of a service on a user terminal (T4) of said local network, said service being delivered by a service platform (14), said method comprising the following steps, implemented by the network gateway:
- reception (E2), from the user terminal, of a first request for domain name resolution intended to obtain the IP address of the service platform,
- resolution (E3) of a first domain name and sending (E4), to the user terminal, of the corresponding IP address,
- routing (E7) of a first request for access to the service, from the user terminal and destined for the service platform, said request comprising the IP address of the service platform and being intended to select the service,
- after selection (E10) of the service from the terminal via the service platform, routing (E13) of a universal address of the selected service, from the service platform to the terminal, said universal address comprising a second domain name, said second domain name comprising, in a first label, at least one parameter defining a bandwidth necessary for the execution of the selected service, and following labels forming a name of the service platform,
- reception (E16), from the terminal, of a second request for domain name resolution, said second resolution request comprising said second domain name,
- analysis (E17) of the second request for domain name resolution and reservation of the bandwidth necessary for the execution of the service for a stream between the terminal and the service platform, said bandwidth being in the first label of the second domain name,
- sending (E19), to the terminal, of the IP address associated with the name of the service platform formed by said following labels.

2. Method according to Claim 1, in which the first label also comprises a class of service intended to accord a priority to a stream associated with the service in the local network.

3. Method according to either of the preceding claims, in which the first label also comprises a duration specifying the time for which the network gateway must guarantee the reservation of the bandwidth.

4. Method according to one of the preceding claims comprising the following steps implemented by the service platform:
- reception (E8), by the service platform, of the first request for access to the service, from the user terminal,
- after selection of the service, determination (E11), by the service platform, of said at least one parameter defining a bandwidth necessary for the execution of the selected service,
- generation and sending (E12), by the service platform to the terminal via the network gateway, of the universal address of the selected service.

5. Method according to Claim 4, comprising the reception (E23) of a second request for access to said service, said reception being representative of the actual reservation, by the network gateway, of the bandwidth necessary for the execution of the service.

6. Network gateway (10) of a local network (100), said network comprising at least one user terminal (T4), a user of said terminal wishing to access a service delivered by a service platform (14), the gateway comprising:
- reception means, designed to receive, from the user terminal, a first request for domain name resolution intended to obtain the IP address of the service platform,
- domain name resolution and sending means, designed to resolve a first domain name and to send, to the user terminal, the corresponding IP address,
- first routing means (106), designed to route a first request for access to the service, from the user terminal and destined for the service platform, said request comprising the IP address of the service platform and being intended to select the service,
- second routing means (107), designed to route, after selection of the service from the terminal via the service platform, a universal address of the selected service, from the service platform to the terminal, said universal address comprising a second domain name, said second domain name comprising, in a first label, at least one parameter defining a bandwidth necessary for the execution of the selected service, and following labels forming a name of the service platform,
- reception means (108), designed to receive, from the terminal, a second request for domain name resolution, said second resolution request comprising said second domain name,
- domain name analysis and configuration means (109), designed to analyse the second request for domain name resolution and reserve the bandwidth necessary for the execution of the service for a stream between the terminal and the service platform, said bandwidth being in the first label of the second domain name,
- sending means (110), designed to send, to the terminal, the IP address associated with the name of the service platform formed by said following labels.

7. System comprising a network gateway according to Claim 6 and a service platform (14) of a network, intended to deliver at least one service to at least one user terminal (T4) of a local network (100) via a network gateway (10), said service platform comprising:
- reception means (144), designed to receive a first request for access to the service, from the user terminal via the network gateway, said request being intended to select a service offered by the service platform,
- determination means (145), designed to determine at least one parameter defining a quality of service for the execution of the selected service,
- generation and sending means (146), designed to generate and to send, to the user terminal via the network gateway, a universal address of the service selected from the user terminal, said address comprising a domain name, said domain name comprising, in a first label, at least one parameter defining a bandwidth necessary for the execution of the selected service, and other labels forming a name of the service platform.

8. Message intended to be transmitted from a service platform (14) to a user terminal (T4) via a network gateway (10), subsequent to a reception, by the platform, of a first request for access to the service and of a selection of the service from the user terminal, said message comprising a domain name comprising, in a first label, at least one parameter defining a bandwidth necessary for the execution of a selected service on the service platform and, in other labels, a name of the service platform, the domain name being intended to be transmitted from the terminal to the network gateway in a request for domain name resolution, the first label being intended to reserve the bandwidth necessary for the execution of the service at the level of the network gateway.

9. Computer program intended to be installed in a memory of a network gateway, comprising instructions for the implementation of the steps of the method for configuration, by a network gateway, of a bandwidth according to one of Claims 1 to 3, when the program is executed by a processor of the network gateway.

10. Data medium on which the program according to Claim 9 is recorded.
